# EUROPÄISCHE PATENTANMELDUNG

(11) **EP 0 845 373 A1**
(43) Veröffentlichungstag der Anmeldung: **03.06.1998**
(21) Anmeldenummer: 97120608.1
(22) Anmeldetag: 25.11.1997
(51) Int. Cl.: B60C 9/22, B60C 9/20

(54) **Fahrzeugluftreifen mit Gürtel und Bandage**

(30) Priorität: 29.11.1996 DE 19649507
(71) Anmelder: Continental Aktiengesellschaft, 30165 Hannover (DE)
(72) Erfinder: Heidenreich, Frank, 30827 Garbsen (DE)

(57) **Zusammenfassung**

Fahrzeugluftreifen mit Karkasse, insbesondere radialer Bauart, mit unterhalb des Laufstreifens und oberhalb der Karkasse sich zwischen den Schultern axial erstreckend ausgebildetem Gürtel aus wenigstens einer Gürtellage mit parallelen in Kautschuk eingebetteten Festigkeitsträgern, insbesondere aus Stahl oder Aramid, die im Reifenzenit einen Winkel von 10 - 35° zur Umfangsrichtung einschließen und
mit einer ersten Bandage radial oberhalb des Gürtels aus prallelen organischen Festigkeitsträgern, die im wesentlichen in Umfangsrichtung ausgerichtet sind, wobei diese erste Bandage zumindest im Bereich der Gürtelränder angeordnet ist und sich axial über die Gürtelränder hinaus erstreckt, wobei im Bereich der Gürtelränder jeweils ein zusätzlicher Bandagestreifen unterhalb der ersten Bandage auf einer Gürtellage angeordnet ist, der sich axial ebenfalls über den Schulterrand hinweg erstreckt, wobei dieser Bandagestreifen mit parallelen organischen Festigkeitsträgern ausgebildet ist, die einen Winkel von 18 bis 90° zur Umfangsrichtung einschließen.

## Beschreibung

Die Erfindung betrifft einen Fahrzeugluftreifen mit Karkasse, insbesondere radialer Bauart, mit unterhalb des Laufstreifens und oberhalb der Karkasse sich zwischen den Schultern axial erstreckend ausgebildetem Gürtel, aus wenigstens einer Gürtellage mit parallelen in Kautschuk eingebetteten Festigkeitsträgern, insbesondere aus Stahl oder Aramid, die im Reifenzenit einen Winkel von 10 bis 35° zur Umfangsrichtung einschließen, und mit einer ersten Bandage radial oberhalb des Gürtels aus parallelen organischen Festigkeitsträgern, die im wesentlichen in Umfangsrichtung ausgerichtet sind, wobei die erste Bandage zumindest im Bereich der Gürtelränder angeordnet ist und sich axial über die Gürtelränder hinaus erstreckt.

Derartige Bandangen sind beispielsweise aus der EP 0 524 702 B1 bekannt. Die Bandage gemäß EP 0 524 702 B1 ist dadurch hergestellt, daß kontinuierliche Fasercorde schraubenförmig um den Gürtel gewickelt werden. Ebenso ist es bekannt, Bandagen derart herzustellen, daß einzelne parallele Bandagestreifen aufgelegt werden oder daß, wie aus der EP 0 504 698 B1 bekannt ist, eine Bandagelage spiralig und die andere durch Auflegen paraller Bandagestreifen erzeugt wird. Ebenso ist es bekannt, derartige Bandagen dadurch zu erzeugen, daß einzelne Bandagestreifen axial nebeneinander angeordnet werden und sich dabei in axialer Richtung schindelförmig überlappen. Eine derartige Bandage ist beispielsweise aus der EP 0 455 454 B1 bekannt.

Die parallelen im wesentlichen in Umfangsrichtung gerichteten Festigkeitsträger der Bandage ermöglichen aufgrund ihrer Umfangsrichtung eine hohe die Gürtelkanten einspannende Zugkraft in Umfangsrichtung, durch die weitgehend verhindert wird, daß sich die Gürtelkanten bei hohen Geschwindigkeiten aufgrund der auf den Gürtel einwirkenden Zentrifugalkräfte radial unzulässig ausdehnen. Hierdurch sollen Ablöseerscheinungen und somit die Zerstörung der Reifen verhindert werden. Die Bandagen erstrecken sich üblicherweise axial nach außen in den Schulterbereich so weit, daß sie sich noch über das axiale Gürtelende hinaus erstrecken. Hierdurch sollen Steifigkeitssprünge im Bereich der Gürtelkanten reduziert werden und Lufteinschlüsse unter den Gürtelkanten während der Herstellung vermieden werden. Auch Toleranzen im Bereich der Fertigung bedingen derartige Überhänge der axialen Erstreckung der Bandage über das Gürtelkantenende hinweg. Die Umfangsausrichtung der Festigkeitsträger der Bandage ermöglicht zwar eine optimal bandagierende Wirkung im Bereich des Gürtels, bewirkt jedoch andererseits, daß zwischen dem in axialer Richtung letzten Festigkeitsträger, der oberhalb des Gürtels angeordnet ist, und dem benachbarten Festigkeitsträger, der bereits axial außerhalb des Gürtels angeordnet ist, lediglich geringe durch den Kautschuk übertragene Bindekraft wirkt, so daß die Festigkeitsträger der Bandage, die axial außerhalb des Gürtels angeordnet sind, keinen oder höchstens zu vernachläßigenden Beitrag zur Bandagewirkung leisten. Zwischen den Festigkeitsträgern der Bandage, die oberhalb des Gürtels und denen, die axial außerhalb des Gürtels angeordnet sind, können hohe Zentrifugalkräfte dazu führen, daß der Gürtel entgegen der Bandagewirkung der den Gürtel angeordneten Festigkeitsträger geringfügig expandiert, wodurch die Festigkeitsträger im Bereich oberhalb des Gürtels sehr stark belastet werden und die Festigkeitsträger der Bandage, die axial neben den Gürtel angeordnet sind, kaum belastet werden, so daß es aufgrund des Wachsens der Gürtelkante zu einem Belastungssprung innerhalb der Bandage kommen kann.

Der Erfindung liegt die Aufgabe zugrunde, bei Beibehaltung der vorteilhaften Bandage mit Festigkeitsträgern, die in Umfangsrichtung ausgerichtet sind, den Fahrzeugreifen so auszubilden, daß auch Bandagebereiche, die sich über den Randbereich des Gürtels hinaus erstrecken, zur Bandagewirkung besser genutzt werden.

Erfindungsgemäß wird die Aufgabe durch die Ausbildung eines Fahrzeugluftreifen gemäß den Merkmalen vom Anspruch 1 gelöst. Die Ausbildung eines zusätzlichen Bandagestreifens mit Festigkeitsträgern mit einem Winkel zwischen 18 bis 90° zur Umfangsrichtung, der unterhalb des ersten Bandagestreifens mit Festigkeitsträgern in Umfangsrichtung ausgebildet ist und jeweils im Bereich der Gürtelkanten ausgebildet ist und sich über die Gürtelkante erstreckt, wird die spannende Haltewirkung der 0°-Bandage auch auf Anteile außerhalb des Gürtels über die schräg verlaufenden Festigkeitsträger dieser zusätzlichen Bandagestreifen verteilt. Hierdurch werden auch die Bereiche der Bandage mit Festigkeitsträgern, die im wesentlichen in Umfangsrichtung ausgerichtet sind, zur Bandagierung des Gürtels genutzt, die außerhalb des Gürtels angeordnet sind. Die Belastungen der Festigkeitsträger der 0°-Bandage im Bereich des Gürtels und derer die außerhalb des Gürtels sind, werden vergleichmäßigt, so daß Belastungsspünge innerhalb der Bandage weitgehend vermieden werden.

Bei gleicher Ausbildung der in Umfangsrichtung ausgerichteten Festigkeitsträger für Bandage wird gegenüber herkömmlichen Bandagen die den Schulterbereich des Gürtels gegen eine radiale Erhebung wirkende Leistungsfähigkeit der Bandage erhöht.

Die Ausbildung gemäß den Merkmalen von Anspruch 2 ermöglicht bei einem Gürtel mit mehreren Gürtellagen eine optimale Bandagewirkung dadurch, daß die Tragkraft der 0°-Bandage auf jede Gürtellage optimal über einen Bandagestreifen mit schräger Anordnung der Festigkeitsträger optimal verteilt wird. Die Festigkeitsträger dieser Bandagestreifen bilden dabei jeweils einen Kreuzverband mit der darunter angeordneten Gürtellage, so daß ein Einleiten der Bandagewirkung optimiert wird.

Die Ausbildung des Fahrzeugluftreifen gemäß den Merkmalen von Anspruch 3 ermöglicht die vorteilhafte Ausbildung mit lediglich einem die Haltekraft verteilenden zusätzlichen Bandagestreifen mit optimaler Einleitung in die am weitesten nach außen sich erstreckende Gürtellage. Die am weitesten nach außen sich erstreckende Gürtellage ist aufgrund der fehlenden zusätzlichen Stützwirkung durch andere Gürtellagen in ihrem äußeren Randbereich flexibler als die anderen Gürtelbereiche. Dieser erhöhten Flexibilität des Gürtels wird bei dieser Ausbildung der Gürtelbandage dadurch Rechnung getragen, daß durch einen Kreuzverband mit dieser Gürtellage gerade dieser flexible Bereich besonders wirksam bandagiert wird.

Die Ausbildung des Fahrzeugluftreifens gemäß den Merkmalen von Anspruch 4 trägt der Beobachtung Rechnung, daß gerade die äußerste Gürtellage in verschiedenen Fällen aufgrund der diese besonders belastenden Zetrifugalkräfte zur Gürtelkantentrennung neigt. Durch die Ausbildung der Bandage gemäß den Merkmalen von Anspruch 4 wird eine optimale Einleitung der bandagierenden Tragwirkung in diesen besonders belasteten Gürtelkantenbereich ermöglicht.

Die Ausbildung gemäß den Merkmalen von Anspruch 5 ermöglicht einen optimalen Kompromiss mit der nahezu in alle Gürtellagen die Tragkräft der 0°-Bandage nahezu optimal eingeleitet wird. Die Anordnung der Festigkeitsträger der zusätzlichen Bandagestreifen mit einem Winkel von zwischen 65° und 90° zur Umfangsrichtung ermöglicht eine zufriedenstellende spannende Tragwirkung der 0°-Bandage bei allen üblichen Gürtellagenanordnungen durch ausreichende Kreuzlage zu allen Gürtellagen.

Die Erfindung wird im folgenden anhand der in den Figuren 1 bis 7 dargestellten Ausführungsbeispiele näher erläutert. Hierin zeigen:
- Figur 1a, b: Darstellung eines Fahrzeugluftreifensmit erster Ausführung
- Figur 2a, b: Darstellung gemäß Figur 1 mit einer zweiten Ausführungsform
- Figur 3a,: b Darstellung gemäß Figur 1 mit einer dritten Ausführungsform
- Figur 4a, b: Darstellung gemäß Figur 1 mit einer vierten Ausführungsform
- Figur 5a, b: Darstellung gemäß Figur 1 mit einer fünften Ausführungsform
- Figur 6a, b: Darstellung gemäß Figur 1 mit einer sechsten Ausführungsform
- Figur 7a, b: Darstellung gemäß Figur 1 mit herkömmlicher zum Stand der Technik gehörender Bandage

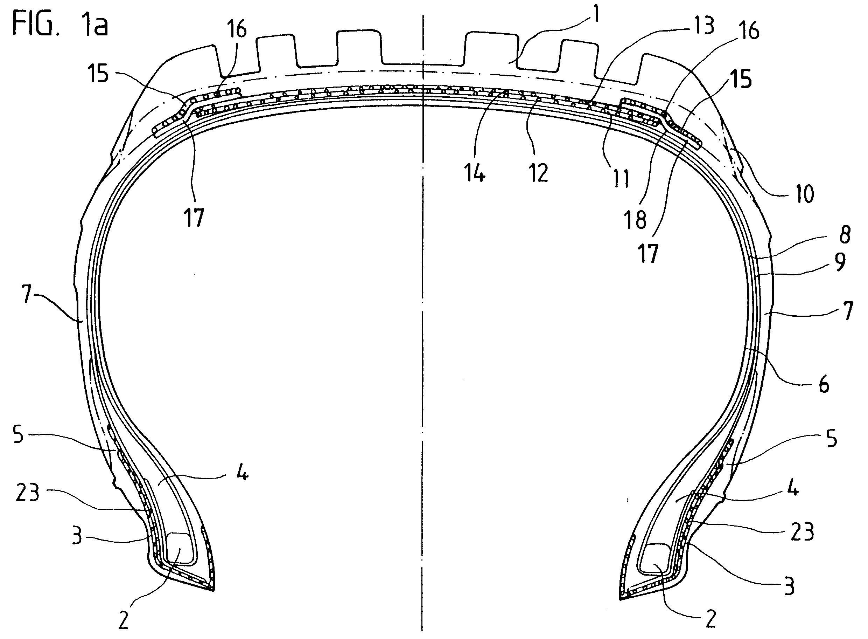

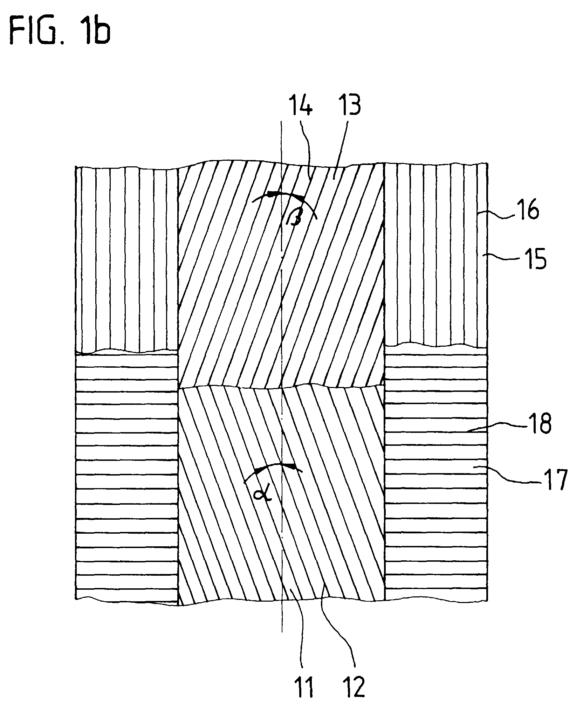

In Figur 1 ist der Aufbau eines Fahrzeugluftreifens beispielhaft dargestellt, bei dem um einen Kern 2 mit Kernprofil 4 eine erste Karkassenlage 8 außerhalb einer dichten Innenschicht 6 über den rechten Schulterbereich und die Zenitebene zu dem linken Schulterbereich und dem linken Kern 2 mit Kernprofil 4 reicht, um den sie in herkömmlicher Weise gelegt ist. Über die ersten Karkassenlage 8 ist in herkömmlicher Weise eine zweite Karkassenlage 9 gelegt, die sich ebenfalls von der in Figur 1a rechts dargestellten Seite des Reifens bis zur links dargestellten Seite erstreckt. In herkömmlicher Weise ist im Kernbereich über einem Wulststreifen 23 und dem Wulstverstärker 3 ein Hornprofil 5 und von diesem ausgehend bis in den Schulterbereich reichend ein Seitenstreifen 7 aufgelegt. Über den Umfang des Reifens reichen außerhalb der Karkassenlagen radialer Bauart angeordnet zwei Stahlgürtellagen 11, 13 mit in Kautschuk eingebetteten Stahlcorden 12 bzw. 14. Die Gürtelkanten sind jeweils mit einer Bandage 15 mit in Umfangsrichtung verlaufen Nyloncorden 16 bedeckt. Die Bandagen 16 werden beispielsweise durch schraubenförmiges, kontinuierliches Wickeln von einem oder mehreren parallelen Nyloncorden in axialer Richtung auf den Gürtel gewickelt und erstrecken sich axial nach außen über die Gürtelkantenenden der beiden Gürtelkantenlagen 12 bzw. 14. Es ist auch denkbar, die Bandage 15 durch Auflegen eines einzigen oder mehrerer paralleler nebeneinander angeordneter Bandagestreifen mit parallelen Nyloncorden, die sich ringförmig um den Gürtel erstrecken oder in sonstiger bekannter Weise zur Erzeugung von Bandagen mit im wesentlichen in Umfangsrichtung gerichteten Festigkeitsträgern herzustellen. Unterhalb der Bandage 15 ist ebenfalls auf die äußere Gürtellage 13 aufgelegt ein Bandagestreifen 18, der sich ebenfalls über die Gürtelkanten der beiden Gürtellagen 12 und 14 hinweg axial nach außen erstreckt und der im Ausführungsbeispiel von Figur 1 im wesentlichen deckungsgleich mit dem Bandagestreifen 15 ausgebildet ist. Der Bandagestreifen 17 ist, wie in Fig. 1b dargestellt ist, mit parallelen Nyloncorden ausgebildet, die unter einem Winkel von 90° zur Umfangsrichtung angeordnet sind.

Die Stahlcorde 12 der ersten Gürtellage 11 sind in der Reifenzenitebene mit einem Winkel α zur Umfangsrichtung ausgebildet. Die Stahlcorde 14 der Gürtellage 13 schließen zur Reifenzernitebene einen Winkel β ein, wobei die Corde 14 eine entgegengesetzte Steigungsrichtung zu den Corden 12 einnehmen, so daß die Corde 14 der zweiten Gürtellage und die Corde 12 der ersten Gürtellage 11 einen Kreuzverband bilden. Die Winkel α und β liegen wie bei herkömmlichen Stahlgürteln in einem Winkelbereich zwischen 18 und 35°. Im Beispiel von Figur 1 beträgt α und β jeweils 20°. Die Nyloncorde 16 der Bandage 15 übertragen ihre bandagierende Wirkung auf die über die darunter liegenden Bandagestreifen 17 mit den Nyloncorden 18 auf die Gürtellagen 11 und 13. Die Nyloncorde 18 bilden zu den Festigkeitsträgern 12 und 14 der beiden Gürtellagen 11 und 13 und zu den Nyloncorden 16 der Bandage 15 aufgrund des großen Winkels, den die Nyloncorde 18 zu den Nyloncorden 16 und zu den Stahlcorden 14 bzw. 12 einschließen, jeweils einen Kreuzverband, der die Einleitung der spannenden Kräfte auch derjenigen Nyloncorde 16 in den Gürtelkantenbereich unter gleichmäßiger Haltekraft Verteilung gewährleistet, die außerhalb der Gürtelkanten angeordnet sind.

Es ist denkbar, wie in Figur 1a dargestellt ist, im Schulterbereich zusätzlich Schulterstreifen 10 anzulegen. Den Abschluß des Reifenaufbaus bildet in bekannter Weise ein Laufstreifen 1 mit Profil, das beispielsweise mit Umfangsrillen 25 ausgebildet ist.

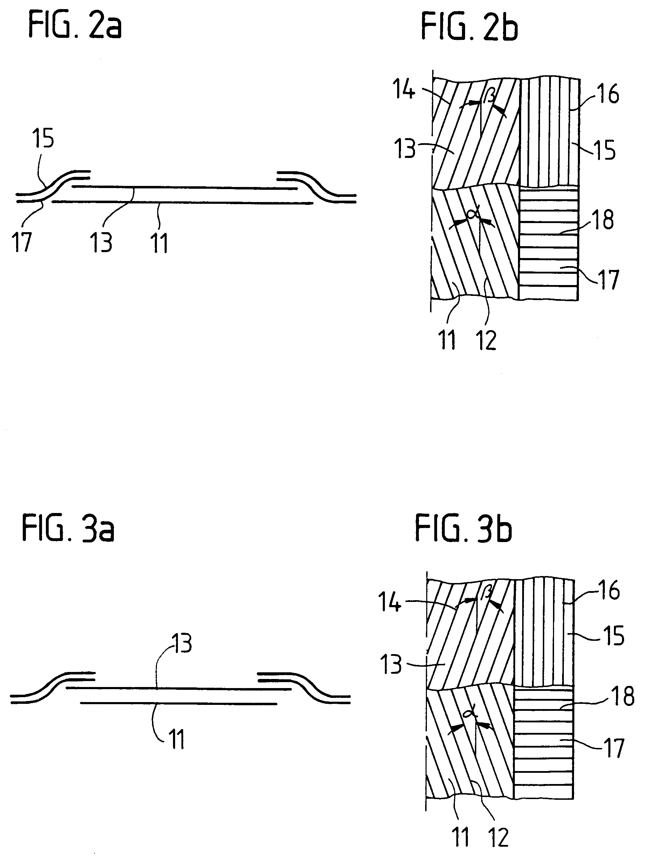

In den Figuren 2 bis 6 sind weitere Ausführungsbeispiele dargestellt, wobei die Gürtel und die Bandagelagen rein schematisch dargestellt sind und zur Vereinfachung die weiteren Bauteile des Reifens nicht mehr eingezeichnet sind Die Gürtellagen wurden zur Vereinfachung außerdem ohne die übliche Krümmung dargestellt.

In Figur 2a ist die obere Gürtellage 13 in ihrer axialen Erstreckung kürzer als die untere Gürtellage 11 ausgebildet. Im Ausführungsbeispiel von Figur 3 ist die obere Gürtellage in ihrer axialen Erstreckung größer als die untere Gürtellage ausgebildet.

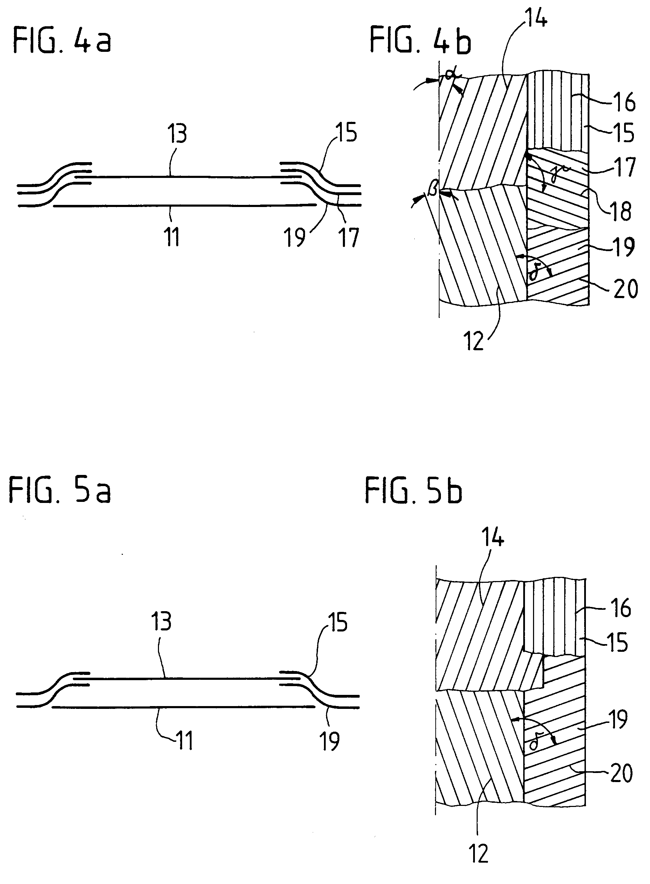

Im Ausführungsbeispiel von Figur 4 ist zwischen unterer Gürtellage 11 und oberer Gürtellage 13 ein zusätzlicher Bandagestreifen 19 im seitlichen Schulterbereich ausgebildet, der sich ebenfalls über die Gürtelkanten erstreckt und im Ausführungsbeispiel von Figur 4 ebenfalls beispielhaft deckungsgleich mit den Bandagestreifen 17 und 15 ausgebildet ist. Die parallelen Nyloncorde 18 der Gürtelbandage 17 schließen in ihrem axial inneren Bereich einen Winkel γ mit den Stahlcorden 14 der von ihr abgedeckten Gürtellage 13 ein. Die parallelen Nyloncorde 20 der Bandage 19 schließen an ihrem axial inneren Ende einen Winkel δ mit den Stahlcorden 12 der von ihr abgedeckten Gürtellage 11 ein. Die Winkel γ und δ sind dabei so gewählt, daß die Festigkeitsträger 18 des Bandagestreifens 17 mit den Stahlcorden 14 der Gürtellage 13 im wesentlichen einen Kreuzverband bilden und daß auch die Nyloncorde 20 der Bandage 19 mit den Stahlcorden 12 der Gürtellage 11 einen Kreuzverband bilden. Hierfür ist der Winkel γ und δ jeweils aus einem Winkelbereich zwischen Winkel jeweils aus einem Winkelbereich zwischen 80 und 90°, beispielsweise in der Darstellung von Figur 4 mit 90° gewählt.

In ähnlicher Weise ist es denkbar, in den Ausführungsbeispielen der Figuren 1 bis 3 die Nyloncorde 18 des Bandagestreifens 17 in einer Winkellage auszubilden, die von dem darin dargestellten 90°-Winkel zur Umfangsrichtung abweichen, solange gewährleistet ist, daß eine ausreichende axiale Richtungskomponente gegeben ist, mit der die Tragwirkung der außerhalb der Gürtelkanten ausgebildeten Nyloncorde 16 der äußeren Bandage 15 auf die Gürtelkanten sicher übertragen wird. Beispielsweise ist es denkbar, die Nyloncorde 18 auch in den Ausführungsbeispielen der Figuren 1 bis 3 unter einem Winkel γ von 80 bis 90° zu den Stahlcorden 14 der oberen Gürtellage 13 auszubilden. Hiedurch wird die Kreuzverbandswirkung zwischen der oberen Gürtellage 13 und dem Bandagestreifen 17 optimiert. Ebenso ist es denkbar, die Nyloncorde 18 des Bandagestreifens 17 jeweils unter einem Winkel zwischen 80 und 90° zu den Stahlcorden der Gürtellage auszubilden, die sich axial am weitesten nach außen erstreckt. Dies ist im Ausführungsbeispiel von Figur 2 die untere Gürtellage 11 und im Ausführungsbeispiel von Figur 3 die obere Gürtellage 13. Hierdurch wird ein optimierter Kreuzverband zwischen der Bandage 17 und der sich axial am weitesten erstreckenden Gürtellage gewährleistet.

Im Ausführungsbeispiel von Figur 5 ist die untere Gürtellage 11 diejenige Gürtellage, die sich am weitesten axial nach außen erstreckt. In diesem Ausführungsbeispiel ist lediglich zwischen den beiden Gürtellagen 11 und 13 eine Gürtelbandage 19 mit parallelen Nyloncorden 20 ausgebildet, die unter einem Winkel δ zu den Stahlcorden 12 der unteren Gürtellage 11 ausgerichtet sind. Der Winkel δ beträgt zwischen 80 und 90°. Hierdurch wird die spannende Bandagewirkung der axial außerhalb der Gürtelkanten ausgebildeten Nyloncorde 16 der Bandage 15 zumindest auf den sich axial weiter nach außen erstreckenden Gürtel 11 optimal übertragen.

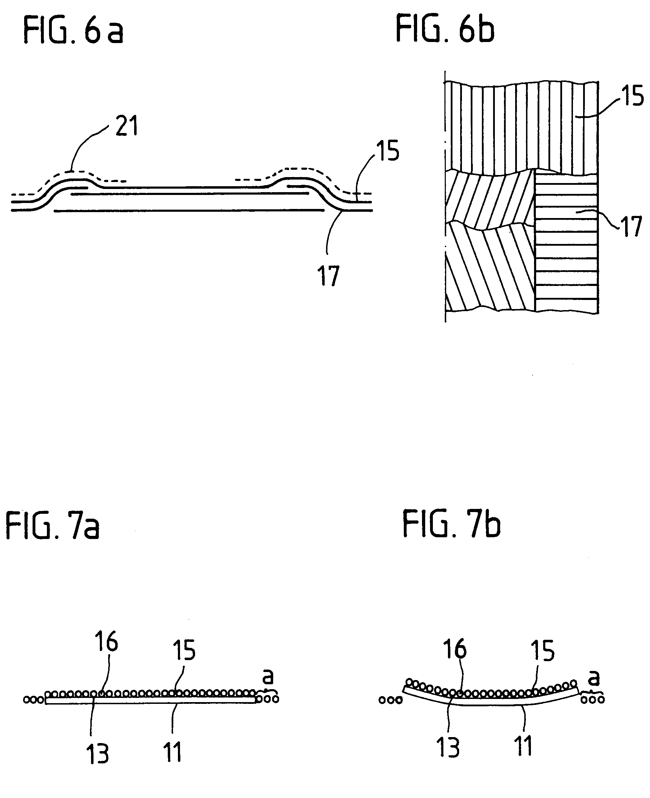

Im Ausführungsbeispiel von Figur 6, das im wesentlichen dem Ausführungsbeispiel von Figur 2 gleicht, ist lediglich die äußere Bandage 15 mit den parallelen in Umfangsrichtung ausgerichteten Nyloncorden 16 so ausgebildet, daß sie sich über den gesamten Gürtelbereich erstreckt. Auch hier wird durch die darunter im Schulterbereich angeordnete Bandage 17 die spannende Tragwirkung derjenigen Nyloncorde 16 der Bandage 15, die außerhalb der Gürtelkanten ausgebildet sind, auf die äußeren Randbereiche dieses Gürtels übertragen.

Auch wenn eine derartige sich über den gesamten Gürtel erstreckende Bandage 15, wie in Figur 6 lediglich anhand des Ausführungsbeispiels von Figur 2 dargestellt ist, ist diese Ausbildung auch an jedem der in den Figuren 1 bis 5 angeführten Ausführungsbeispielen denkbar. Ebenso ist es denkbar, wie beispielsweise im Ausführungsbeispiel von Figur 6a gestrichelt dargestellt ist, die Schulterbereiche zusätzlich durch einen weiteren zusätzlichen Bandagestreifen 21, der oberhalb oder unterhalb der Bandage 15 angeordnet sein kann und der ebenfalls parallel in Umfangsrichtung ausgerichtete Nyloncorde aufweist, zu festigen.

Dieser zusätzliche Bandagestreifen 21 kann dabei dadurch erzeugt werden, daß ein weiterer Bandagestreifen mit parallelen in Umfangsrichtung gerichteten Corden aus einzelnen nebeneinander oder schindelförmig sich überlappenden angeordneten Bandagestreifen ringförmig aufgelegt wird oder dadurch, daß er aus einem oder mehreren parallelen kontinuierlichen Nyloncorden schrauben- oder spiralförmig aufgewickelt wird. Es ist auch denkbar, ihn dadurch zu erzeugen, daß die Bandage 15 im Schulterbereich nach axial innen zurückgefaltet ist.

Die Festigkeitsträger 12 und 14 der Gürtellagen können dabei, wie beispielhaft angegeben, aus Stahlcorden bekannter Art oder aber aus jedem anderen zum Aufbau von Gürtellagen geeigneten Material hergestellt sein. Beispielsweise ist es denkbar, diese Festigkeitsträger aus Corden aus Aramid herzustellen. Ebenso ist es denkbar, die Festigkeitsträger der Gürtellagen aus Corden oder aus Monofilamenten herzustellen.

Die Festigkeitsträger der Bandagen 15, 17 und 19 können, wie beispielhaft angegeben, aus Nyloncorden oder aus sonstigen bekannten zur Bandage geeigneten organischen Festigkeitsträgern ausgebildet sein. Beispielsweise ist es denkbar, anstelle von Nylon, Reyon, Polyester oder andere geeignete textile Fasercorde einzusetzen. Anstelle von Corden ist es auch denkbar, Monofilamente einzusetzen. Diese können dabei beispielsweise in ihrem Querschnitt kreisförmig oder elliptisch ausgebildet sein.

Der Gürtel kann, wie dargestellt, aus zwei Gürtellagen 11 und 13 ausgebildet sein. Es ist auch denkbar, weitere Gürtellagen auszubilden. Ebenso ist es denkbar, lediglich eine Gürtellage auszubilden.

In Figur 7 ist rein schematisch eine zum Stand der Technik gehörende Bandage dargestellt. Über die äußere Gürtellage 13 ist lediglich eine Bandage 15 mit parallelen im wesentlichen in Umfangsrichtung gerichteten Nyloncorden 16 ausgebildet, wobei sich die Bandage 15 in axialer Richtung jeweils über die Ränder der Gürtellagen 11 und 13 erstreckt, so daß außerhalb der Gürtelränder 11 und 13 ebenfalls Bandagewindungen der Festigkeitsträger 16 ausgebildet sind. Wie in Figur 7b in übertriebener Darstellung am Beispiel eines Reifens unter Hochgeschwindigkeitsbedingungen schematisch dargestellt ist, erheben sich die Gürtelkantenbereiche aufgrund der Zentrifugalkräfte. Dieser Erhebung wirken lediglich die Bandagekräfte derjenigen Windungen der Festigkeitsträger 16 der Bandage 15 entgegen, die auf den Gürtellagen angeordnet sind. Diejenigen Windungen der Nyloncorde 16, die in dem Bereich a außerhalb der Gürtellagen ausgebildet sind, wirken dieser Erhebung kaum entgegen. Sie können jedoch in die darunter gelegene Karkasse einschneiden und diese gefährden.

### Bezugszeichenliste

- 1: Laufstreifen
- 2: Kern
- 3: Wulstverstärker
- 4: Kernprofil
- 5: Hornprofil
- 6: Innenschicht
- 7: Seitenstreifen
- 8: Karkassenlage
- 9: Karkassenlage
- 10: Schulterstreifen
- 11: Gürtellage
- 12: Festigkeitsträger
- 13: Gürtellage
- 14: Festigkeitsträger
- 15: Gürtelbandage
- 16: Festigkeitsträger
- 17: Gürtelbandage
- 18: Festigkeitsträger
- 19: Gürtelbandage
- 20: Festigkeitsträger
- 21: Gürtelbandage
- 23: Wulststreifen
- 25: Umfangsnut

## Patentansprüche

1. Fahrzeugluftreifen mit Karkasse, insbesondere radialer Bauart, mit unterhalb des Laufstreifens und oberhalb der Karkasse sich zwischen den Schultern axial erstreckend ausgebildetem Gürtel aus wenigstens einer Gürtellage mit parallelen in Kautschuk eingebetteten Festigkeitsträgern, insbesondere aus Stahl oder Aramid, die im Reifenzenit einen Winkel von 10 - 35° zur Umfangsrichtung einschließen und
mit einer ersten Bandage radial oberhalb des Gürtels aus prallelen organischen Festigkeitsträgern, die im wesentlichen in Umfangsrichtung ausgerichtet sind, wobei diese erste Bandage zumindest im Bereich der Gürtelränder angeordnet ist und sich axial über die Gürtelränder hinaus erstreckt,
**dadurch gekennzeichnet,**
daß im Bereich der Gürtelränder jeweils ein zusätzlicher Bandagestreifen unterhalb der ersten Bandage auf einer Gürtellage angeordnet ist, der sich axial ebenfalls über den Schulterrand hinweg erstreckt, wobei dieser Bandagestreifen mit parallelen organischen Festigkeitsträgern ausgebildet ist, die einen Winkel von 18 bis 90° zur Umfangsrichtung einschließen.

2. Fahrzeugluftreifen gemäß den Merkmalen von Anspruch 1,
- wobei der Gürtel aus wenigstens zwei Gürtellagen mit jeweils parallelen Festigkeitsträgern aufgebaut ist, wobei die Festigkeitsträger der einen Gürtellage zu denen der anderen Gürtellage eine entgegengegerichtete Steigungsrichtung aufweisen, so daß die Festigkeitsträger dieser Gürtellagen ein Kreuzverband bilden,
- wobei oberhalb der äußeren Gürtellage die erste Bandage ausgebildet ist und
- wobei auf jeder Gürtellage unterhalb der ersten Bandage im Schulterbereich jeweils ein Bandagestreifen mit parallelen organischen Festigkeitsträgern ausgebildet ist, der sich axial über den Gürtelrand hinweg erstreckt, wobei die Festigkeitsträger dieser Bandagestreifen jeweils einen Winkel von 18 bis 90° zur Umfangsrichtung aufweisen und insbesondere einen Winkel im wesentlichen von 90° zu den Festigkeitsträgern derjenigen Gürtellage aufweisen, auf der der jeweilige Bandagestreifen angeordnet ist.

3. Fahrzeugluftreifen gemäß den Merkmalen von Anspruch 1,
- wobei der Gürtel aus wenigstens zwei Gürtellagen mit jeweils parallelen Festigkeitsträgern aufgebaut ist, wobei die Festigkeitsträger der einen Gürtellage zu denen der anderen Gürtellage eine entgegengerichtete Steigungsrichtung aufweisen, so daß die Festigkeitsträger dieser beiden Gürtellagen einen Kreuzverband bilden,
- wobei oberhalb der äußeren Gürtellage die erste Bandage ausgebildet ist und
- wobei der zusätzliche Bandagestreifen auf der äußeren Gürtellage unterhalb der ersten Bandage aufgebaut ist und die Festigkeitsträger dieses zusätzlichen Bandagestreifens im wesentlichen einen Winkel von 65° bis 90° zu den Festigkeitsträgern der sich am weitesten nach axial außen erstreckenden Gürtellage einschließen.

4. Fahrzeugluftreifen gemäß den Merkmalen von Anspruch 1,
- wobei der Gürtel aus wenigstens zwei Gürtellagen mit jeweils parallelen Festigkeitsträgern aufgebaut ist, wobei die Festigkeitsträger der einen Gürtellage zu denen der anderen Gürtellage eine entgegengerichtete Steigungsrichtung aufweisen, so daß die Festigkeitsträger dieser beiden Gürtellagen einen Kreuzverband bilden,
- wobei oberhalb der äußeren Gürtellage die erste Bandage ausgebildet ist,
- wobei der zusätzliche Bandagestreifen auf der äußeren Gürtellage unterhalb der ersten Bandage aufgebaut ist und die Festigkeitsträger dieses zusätzlichen Bandagestreifen im wesentlichen einen Winkel von 65° bis 90° zu den Festigkeitsträgern der oberen Gürtellage einschließen.

5. Fahrzeugluftreifen gemäß den Merkmalen von Anspruch 1,
- wobei der Gürtel aus wenigstens zwei Gürtellagen mit jeweils parallelen Festigkeitsträgern aufgebaut ist, wobei die Festigkeitsträger der einen Gürtellage zu denen der anderen Gürtellage eine entgegengerichtete Steigungsrichtung aufweisen, so daß die Festigkeiträger dieser Gürtellagen einen Kreuzverband bilden,
- wobei oberhalb der äußeren Gürtellage die erste Bandage ausgebildet ist,
- wobei wenigstens auf einer Gürtellage unterhalb des ersten Bandagestreifens ein derartiger zusätzlicher Bandagestreifen ausgebildet ist, insbesondere auf der äußeren Gürtellage, und die Festigkeitsträger dieses Bandagestreifens im wesentlichen einen Winkel von 65° bis 90° zur Umfangsrichtung einschließen.
